# FASCICULE DE BREVET EUROPEEN

(11) **EP 0 911 907 B1**
(45) Date de publication et mention de la délivrance du brevet: **23.01.2002**
(21) Numéro de dépôt: 98420174.9
(22) Date de dépôt: 06.10.1998
(51) Int. Cl.: H01R 4/24

(54) **Module d'interconnexion de deux lignes monopaires**
Verbindungsmodul für zwei einpaarige Leitungen
Interconnection module for two monopair lines

(30) Priorité: 21.10.1997 FR 9713403
(43) Date de publication de la demande: 28.04.1999
(73) Titulaire: POUYET S.A., 94207 Ivry sur Seine (FR)
(72) Inventeur: Bonvallat, Pierre, 74300 Cluses (FR); Fasce, Xavier, 74970 Marigner (FR)
(74) Mandataire: Wind, Jacques

(56) Documents cités:
- EP-A- 0 710 040
- EP-A- 0 753 899
- WO-A-93/07654
- US-A- 5 449 299
- US-A- 5 515 436

## Description

La présente invention se rapporte à un module d'interconnexion de deux lignes monopaires, dont une ligne d'arrivée et une ligne de départ, typiquement deux lignes téléphoniques ou informatiques, ce module étant d'un seul et même bloc et utilisant des contacts autodénudants, ou «I.D.C.» (Contacts à Déplacement d'Isolant).

Des modules de ce type sont des modules pour lesquels la connexion des deux lignes s'effectue sans autre outil qu'un simple tournevis. Ils sont par exemple décrits dans le document US-A-5.515.436 et sont largement vendus par la Société Demanderesse.

De tels modules sont généralement prévus pour raccorder une ligne comportant des fils dits « petits fils » dont le diamètre est de l'ordre de 0,4 mm à 0,8 mm, à une ligne comportant de plus gros fils, dont le diamètre peut généralement varier entre 0,5 et 1,1 mm.

On s'est jusqu'à présent attaché à n'utiliser qu'une seule et même vis maîtresse pour effectuer le raccordement, sur leurs contacts I.D.C. respectifs, aussi bien des fils d'arrivée que des fils de départ.

En conséquence, les fils d'arrivée, généralement les « petits fils », sont raccordés en premier par une première descente de la vis, poussant leurs contacts I.D.C., et ils ne peuvent ensuite plus être retirés car leurs I.D.C. ne peuvent alors plus être ramenés à leur position de départ.

Ces modules, selon US-A-5.515.436 par exemple, comportent souvent un dispositif de protection et de coupure de ligne, incorporant un parafoudre ou « parasurtension », ce dispositif étant constitué par un ensemble enfichable sur le module d'interconnexion. Le fait qu'il s'agisse d'un ensemble enfichable pénalise cependant le prix de revient d'un tel module d'interconnexion.

Comme état de la technique, concernant un module d'interconnexion dans lequel peut être enfiché un module de protection sans coupure de ligne, peut être cité le document US-A-5.371.648.

Comme état de la technique, concernant un module d'interconnexion incorporant un dispositif de protection sans possibilité de coupure de ligne, peut être cité le document US-A- 4.763.354.

Comme état de la technique, relatif à un module d'interconnexion incorporant un dispositif de coupure de ligne et de test, peut être cité le document EP-A- 0.710.040. Selon ce document, le dispositif de coupure de ligne et de test se compose d'un puits qui contient les extrémités libres de quatre lames métalliques de test et qui est fermé, de manière étanche, par un couvercle qui assure la continuité de ligne lorsqu'il est fermé et qui à contrario coupe la ligne lorsqu'il est ouvert.

On connaît enfin d'après le WO-93/23960 un module d'interconnexion de deux lignes monopaires, dont une ligne d'arrivée et une ligne de départ. Ce module utilise des contacts autodénudants pour réaliser la connexion des extrémités respectives des fils électriques gainés de chacune des deux paires, les deux fils électriques gainés, "petits fils", d'une des deux lignes ayant une âme conductrice qui est de diamètre inférieur à celui de l'âme conductrice respective de chacun des deux fils électriques gainés, "gros fils", de l'autre ligne. Ce module comporte par ailleurs un dispositif de coupure de ligne incorporé dans le module d'interconnexion, sous la forme d'un puits de test comportant les extrémités libres de quatre lames. La paire de contacts autodénudants relatifs aux deux "gros fils" et la paire de contacts autodénudants relatifs aux deux "petits fils" sont respectivement positionnées de part et d'autre de ce puits. La paire de contacts autodénudants relatifs aux deux "gros fils" est associée à un premier dispositif isolant de réception de ces deux fils et d'introduction forcée de ceux-ci dans leurs fentes autodénudantes respectives. Ce premier dispositif comporte une vis maîtresse d'actionnement pour pousser ces deux fils dans ces fentes réceptrices. Ce dispositif isolant de connexion forcée des gros fils est placé du même côté du puits que cette paire de contacts autodénudants. L'autre paire de contacts autodénudants, relative aux deux "petits fils" est associée à un deuxième dispositif isolant de réception et d'introduction forcée de ces petits fils qui est placé du même côté du puits que cette autre paire.

Par ailleurs, il faut actuellement pouvoir satisfaire, de manière la plus économique possible, à des exigences particulières des utilisateurs, et ces modules connus ne sont pas aisément modifiables par le constructeur pour lui permettre de satisfaire à de telles exigences à moindres frais.

L'invention a en conséquence pour objet de proposer un module qui non seulement permet de déconnecter et reconnecter à loisir les deux « petits fils », mais qui encore peut être adapté, à moindre frais, à diverses utilisations ou configurations particulières qui peuvent être demandées par les utilisateurs.

En outre, il est actuellement habituel de remplir, avant utilisation, les orifices d'introduction des deux paires de fils par un gel d'étanchéité. Ceci est assez malaisé, car il s'agit d'orifices borgnes dont le remplissage par le gel d'étanchéité entraîne la subsistance néfaste de bulles d'air dans le fond de ces orifices. L'invention remédie, selon un aspect avantageux, à cet inconvénient en conformant le module de manière à ce que ce remplissage des orifices borgnes d'introduction des fils se fasse par le fond de ces orifices et non pas par leur embouchure, au moyen de canaux spéciaux d'injection de gel qui débouchent dans le fond de chacun de ces orifices.

Elle se rapporte à cet effet à un module d'interconnexion de deux lignes monopaires, dont une ligne d'arrivée et une ligne de départ, ce module utilisant des contacts autodénudants pour réaliser la connexion des extrémités respectives des fils électriques gainés de chacune des deux paires, les deux fils électriques gainés, appelés "petits fils", d'une des deux lignes ayant une âme conductrice qui est de diamètre inférieur à celui de l'âme conductrice respective de chacun des deux fils électriques gainés, appelés "gros fils", de l'autre ligne, ce module comportant par ailleurs un dispositif de coupure de ligne, incorporé dans le module d'interconnexion, sous la forme d'un puits de test comportant les extrémités libres de quatre lames, une paire de contacts autodénudants relatifs aux deux « gros fils » et une paire de contacts autodénudants relatifs aux deux « petits fils » étant respectivement positionnées de part et d'autre de ce puits, la paire de contacts autodénudants relatifs aux deux « gros fils » étant associée à un premier dispositif isolant de réception de ces deux fils et d'introduction forcée de ceux-ci dans leurs fentes autodénudantes respectives, ce premier dispositif comportant une vis maîtresse d'actionnement pour pousser ces deux fils dans ces fentes réceptrices, ce dispositif isolant de connexion forcée des gros fils étant placé du même côté du puits que cette paire de contacts autodénudants, l'autre paire de contacts autodénudants, relative aux deux « petits fils », étant associée à un deuxième dispositif isolant de réception et d'introduction forcée de ces petits fils qui est placé du même côté du puits que cette autre paire.

Conformément à la présente invention, le module d'interconnexion est caractérisé en ce que les extrémités libres des quatre lames constituent des brins de test des quatre bornes de lignes, en ce que le puits de test est refermé, de manière étanche par un couvercle de mise en continuité ou de coupure de ligne par interconnexion, ou non, de ces lames de test, et en ce que le puits de test est agencé pour recevoir, de manière amovible, un parasurtension.

Avantageusement, le parasurtension peut lui-même être retenu dans une pince isolante comportant un organe de préhension qui affleure ou dépasse de l'embouchure du puits lorsque ce parasurtension est mis en place dans le puits avec cette pince , et qui demeure alors dans ce puits avec le parasurtension qu'elle maintient, de sorte qu'alors ce parasurtension devient aisément extractible de ce puits à l'aide de cette pince.

Avantageusement encore, ce module comporte un ou plusieurs orifices d'injection d'un gel d'étanchéité, ce ou ces orifices étant reliés, dans le corps du module, à un ou plusieurs canaux d'injection de gel, qui au moins aboutissent dans le fond des deux orifices borgnes d'introduction des deux « gros fils » et dans le fond des deux orifices borgnes d'introduction des deux « petits fils », afin que ce remplissage en gel de ces quatre orifices borgnes se fasse par le fond de ces orifices borgnes et non pas par leur embouchure, ce qui évite la formation de bulles d'air.

Avantageusement aussi, le dispositif isolant de réception et d'introduction forcée des petits fils est un simple poussoir de connexion à action manuelle.

De toute façon, l'invention sera bien comprise, et ses avantages et caractéristiques ressortiront mieux, lors de la description, suivante d'un exemple non-limitatif de réalisation, en référence au dessin schématique annexé dans lequel :
- Figure 1 est une perspective d'ensemble de ce module.
- Figure 2 en est une vue perspective partiellement éclatée.
- Figure 3 est un détail agrandi montrant le système particulier de préhension et maintien de son para-surtension.
- Figure 4 est une première coupe longitudinale et verticale de ce module, montrant celui-ci avec son volet de coupure ouvert.
- Figure 5 en est une autre coupe longitudinale, selon V-V de Figure 6, volet fermé, fils connectés, et montrant le circuit d'injection et de passage du gel d'étanchéité.
- Figure 6 est une coupe horizontale selon VI-VI de Figure 5.
- Figure 7 est une coupe transversale partielle effectuée au niveau d'un contact de réception du parasurtension.
- Figure 8 est une vue éclatée de l'ensemble des connexions comprises dans ce module, cette vue permettant de bien comprendre sa connectique interne.
- Figure 9 montre comment on peut facilement modifier ce module pour un client souhaitant utiliser un module enfichable de coupure, ou de coupure et protection, selon le document US-A-5.515.436.
- Figures 10 et 11 montrent comment on peut aisément adapter ce module par un montage multiple , dit « en bloc » fait en usine sur un câble d'arrivée multi-lignes.
En se reportant à l'ensemble des figures 1 à 8, il s'agit d'un module d'interconnexion de deux lignes téléphoniques ou informatiques monopaires, par exemple (figure 5) :
- une ligne bifilaire 1 comportant deux fils électriques gainés, dits « petits fils », ayant chacun une âme conductrice d'un diamètre de 0,4 mm à environ 0,8 mm (par exemple ici égale à 0,4 mm)
- et une ligne bifilaire 2 comportant deux fils électriques gainés, dits « gros fils », ayant chacun une âme conductrice comprise entre 0,5 et 1,1 mm (par exemple ici égale à 0,8 mm).

S'agissant par exemple de deux lignes téléphoniques, la ligne bifilaire 1 provient du câble d'arrivée multi-lignes qui fait partie du réseau de distribution téléphonique, tandis que la ligne bifilaire 2 est la ligne de départ vers l'abonné.

Dans une autre configuration, la ligne « gros fils » 2 est composée de deux fils aériens en provenance du réseau de distribution téléphonique, tandis que la ligne « petits fils » 1 est la ligne de départ vers l'installation intérieure de l'abonné. Dans un tel cas, la ligne « gros fils » 2 est la ligne d'arrivée, tandis que la ligne « petits fils » 1 est la ligne de départ.

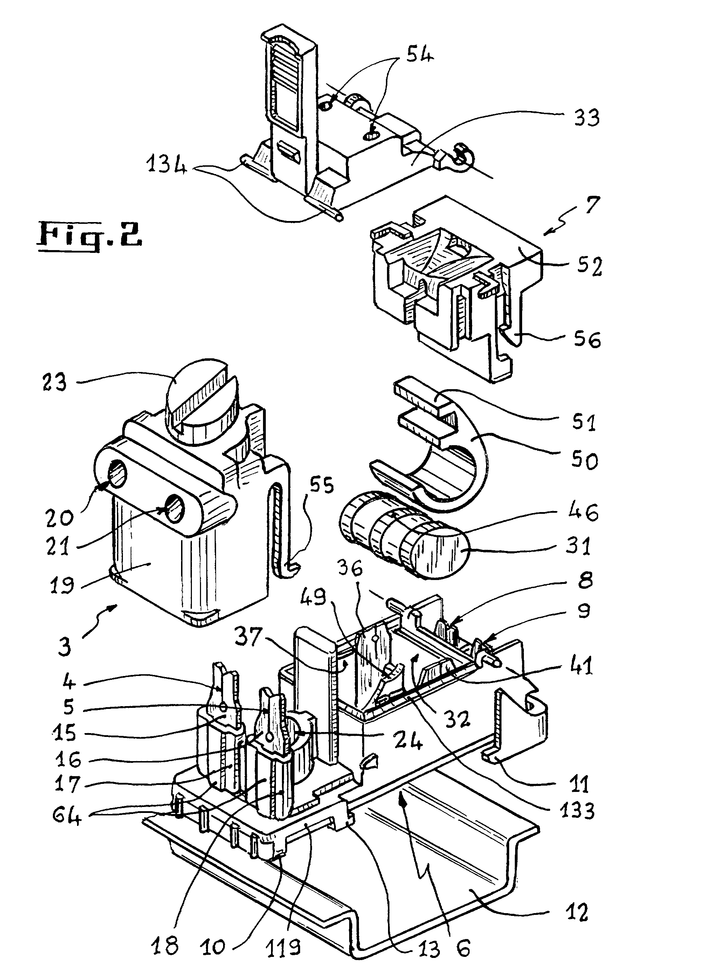

Conformément à l'invention, ce module, qui est comme les modules de l'art antérieur précité, un module à connexion dite « sans outils » (c'est-à-dire : sans autre outil qu'un simple tournevis), se compose en fait, dans un seul et même bloc, de trois parties alignées, reliées électriquement entre elles, et ayant des fonctionnalités bien distinctes. Plus précisément, ces trois parties alignées sont les suivantes (de gauche à droite sur les figures annexées) :
- une première partie 3, formant une première extrémité de l'alignement, dont la fonctionnalité se borne au raccordement, par chassage dans deux fentes auto-dénudantes respectives 4, 5 (figure 2), des deux gros fils 2 ;
- une seconde partie 6 qui forme le milieu de l'alignement, et qui constitue la zone de coupure et de test de ligne ainsi que la zone « de protection » recevant un parafoudre ou « para-surtension » ;
- et une troisième partie 7, formant l'autre extrémité de l'alignement, dont la fonctionnalité se borne au raccordement, par chassage dans deux fentes auto-dénudantes respectives 8, 9 (figure 2), des deux petits fils 1.

A noter donc que les parties 3, 7 de raccordement des fils sont donc situées de part et d'autre de la partie centrale 6 de coupure, test, et protection.

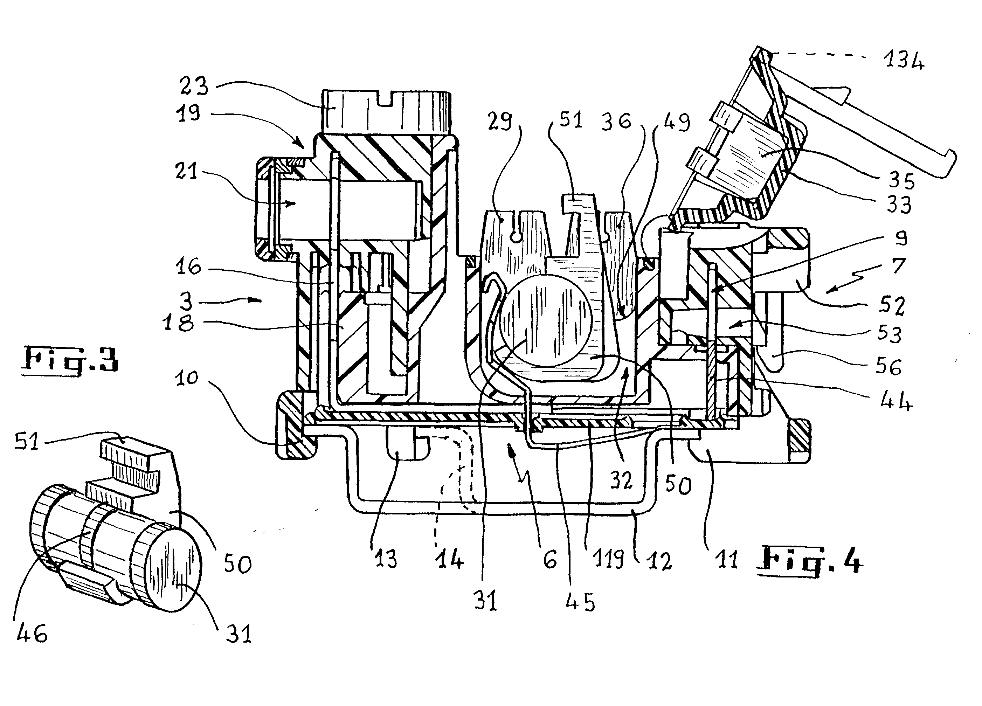

Comme tous les modules de l'art antérieur, ce module est prévu pour venir se fixer (figure 4), par des pattes 10, 11 formant glissière, sur un rail métallique normalisé 12.

Selon une particularité intéressante de ce module, celui-ci présente au moins une patte additionnelle 13, plus rapprochée de la patte 11 que la patte 10, permettant (figure 4) de monter aussi ce module sur un rail normalisé 14, moins large que le rail 12.

La partie 3 de connexion des deux gros fils 2 comporte deux contacts I.D.C. 15, 16, qui sont placés, dans des réceptacles de maintien 17, 18, de manière orthogonale au socle 119 du module. Ces contacts sont de dimensions adaptées à la réception des gros fils 2, dont l'âme peut avoir un diamètre allant jusqu'à environ 1,1 mm.

L'ensemble 15 à 18 reçoit en enfichage un, maintenant bien classique, chapeau-poussoir isolant 19 de réception et connexion des deux gros fils par passage de ceux-ci dans les fentes autodénudantes respectives 4, 5 des deux contacts I.D.C. 15, 16.

Pour ceci, le chapeau-poussoir 19 comporte deux orifices borgnes 20, 21 de réception des deux gros fils respectifs 2, et il est équipé d'une vis-maîtresse qui traverse un puits récepteur 24 qui fait partie de l'embase, pour venir se visser, au fond de ce puits, dans un classique écrou métallique (non représenté) ou directement dans un taraudage moulé dans cette embase. En vissant cette vis 23. on fait descendre le chapeau de connexion 19, ce qui chasse les gros fils 2, préalablement introduits dans les orifices borgnes 20, 21, dans les fentes auto-dénudantes 4, 5 des deux I.D.C. 15 et 16, ceci étant bien classique en soi.

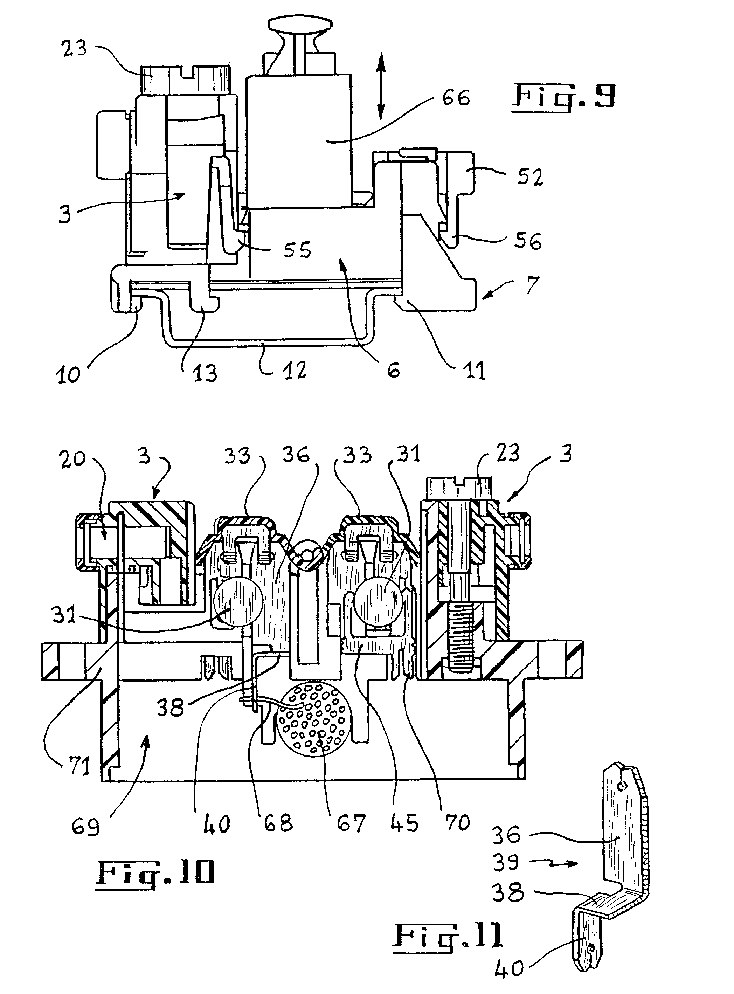

Les deux I.D.C. 15, 16 font chacun partie d'un contact complexe respectif 25, 26 (figure 8), réalisé en circuit métallique plat découpé, qui les relie électriquement chacun, par l'intermédiaire d'une branche longitudinale et longiligne, respectivement 27, 28, à un contact 29, 30 de test et de réception d'un parasurtension 31.

Ces deux contacts de test 29, 30 font partie de la partie médiane précitée 6 du module.

Cette partie médiane 6 est constituée d'un puits à section rectangulaire 32 (figure 2) comprenant un joint d'étanchéité 133 et refermé ou non par un couvercle basculant 33 qui comporte lui-même, à l'instar de celui décrit en variante dans le document EP-A-0.710.040 précité, deux contacts 34, 35 (figures 8, 4, 5) de mise en continuité de ligne.

Lorsque le couvercle 33 est fermé, les contacts 34 et 35 relient électriquement entre eux :
- Le contact 29 avec un contact plat 36 qui est plaqué, à l'instar de ce contact 29, contre une des deux surfaces internes longitudinales 37 (figure 2) du puits 32, et qui est relié, via une branche longitudinale de liaison 38 faisant partie d'un contact complexe 39, à un premier contact I.D.C. 40 de la troisième partie 7, destiné à recevoir un des deux petits fils 1.
- Le contact 30 avec un autre contact plat 41, identique au contact 36 mais plaqué sur la surface opposée du puits, ce contact 41 faisant lui aussi partie d'un contact complexe 42 qui le relie, par une branche longitudinale 43, au second contact I.D.C. 44 de réception du deuxième petit fil 1.
Par ailleurs, le puits 32 inclut un contact de masse 45 (figures 2, 4, 5, 8) qui vient en appui, par dessous le module, contre le rail métallique de réception 12 ou 14 et qui, dans le puits 32, est situé à mi-chemin entre les contacts 29 et 30 afin de pouvoir recevoir l'électrode médiane de masse 46 du parasurtension 31 lorsqu'il est en place entre deux parties élastiques avancées 47, 48 des contacts respectifs 29 et 30.

Pour bien guider le parasurtension 31 entre ses contacts de réception 47 et 48, le puits 32 présente, à l'intérieur et en son milieu, un profil adapté 49.

En outre, selon un aspect intéressant, le parasurtension 31 est retenu, de manière amovible, dans une pince isolante 50 (figures 2 et 3). Cette pince 50 comporte un organe de préhension manuel 51 qui dépasse de l'embouchure du puits 32 lorsque le parasurtension 31 est mis en place dans ce puits, avec cette pince 50 qui demeure alors dans le puits avec le parasurtension qu'elle maintient. Le parasurtension 31 est alors aisément extractible du puits à l'aide de sa pince de maintien 50. Lorsque le couvercle 33 est refermé, la partie de préhension protubérante 51 vient alors se loger dans le creux de ce couvercle.

La troisième partie précitée 7 comporte les deux I.D.C. de connexion autodénudante 40, 44 des petits fils 1 ainsi qu'un poussoir isolant de connexion 52 qui vient s'enficher sur ces deux I.D.C. 40, 44. De manière en soi connue dans la technique des I.D.C., le poussoir 52 comporte deux orifices borgnes 53 de réception respective de chacun des petits fils 1.

Classiquement, on introduit tout d'abord les deux petits fils 1 dans ces orifices 53, le poussoir 52 étant soulevé, puis on pousse manuellement le poussoir sur les I.D.C. 40, 44, pour le faire descendre le long de ceux-ci et chasser ainsi les deux petits fils 1 dans leurs fentes auto-dénudantes respectives 8 et 9. Le poussoir 52 reste alors en place, et il est ensuite possible de déconnecter les fils 1 en relevant tout simplement ce poussoir pour dégager ces fils des fentes auto-dénudantes 8, 9, de la même manière dont on peut déconnecter les gros fils 2 en dévissant la vis 23 pour relever le chapeau 19.

A noter que, facultativement, le couvercle 33 peut être percé, comme représenté, de deux orifices 54, remplis d'une graisse ou d'un gel d'étanchéité, par lesquels on peut faire passer une fiche de test respective, ceci étant connu en soi dans d'autres dispositifs.

A noter également qu'aussi bien le chapeau de connexion 19 que le poussoir de connexion 52 possèdent chacun préférentiellement un ou des cliquets 55, 56 de fin de course de connexion qui non seulement assurent, par leur encliquetage en fin de course, une mise en place ferme du poussoir, mais encore, par le claquement qui résulte de cet encliquetage, informent le monteur du fait que la connexion autodénudante est positivement effectuée.

Par ailleurs, comme on le voit sur la figure 2, le couvercle basculant 33 possède au moins un ergot latéral de verrouillage 134 (ici un ergot 134 de chaque coté du couvercle 33) qui, lors de la remontée du chapeau de connexion 19 par desserrage de la vis maîtresse 23, rend ce chapeau 19 imperdable tant que ce couvercle est fermé. Si toutefois, pour des raisons d'exploitation, le monteur a néanmoins besoin d'extraire ce chapeau 19, il lui suffit pour ceci d'ouvrir le couvercle basculant 33, ce qui dégage l'ergot 134 et autorise alors cette extraction du chapeau 19.

Le puits 32 est à fermeture étanche, car il ne convient pas de le remplir d'un gel d'étanchéité si l'on veut, comme expliqué dans le document EP-A-0.710.040 précité, pouvoir effectuer, de manière renouvelable, des test de ligne à l'aide de pinces-crocodile qui viennent pincer individuellement l'un ou l'autre des contacts de tests 29, 30, 36, 41.

En revanche, les deux orifices borgnes 20, 21, et les deux orifices borgnes 53, doivent être préférentiellement remplis d'un gel ou d'une graisse d'étanchéité, et les quatre contacts I.D.C. 15, 16, 40, 44 doivent préférentiellement être recouverts d'un tel gel ou graisse.

Selon un aspect extrêmement intéressant de la présente invention, ce module comporte un circuit spécial d'injection du gel ou graisse d'étanchéité, à travers quatre ( ce nombre n'étant donné qu'à titre d'exemple non limitatif) petits orifices d'injection prévus dans le socle 19 du module :
- deux orifices d'injection 57 à l'avant, pour le gel ou graisse d'étanchéité qui va remplir, par l'arrière de ceux-ci les deux orifices 20, 21 d'introduction des gros fils 2, et qui va en outre, par un cheminement particulier, revêtir les deux I.D.C. 15 et 16,
- et deux orifices d'injection 58 à l'arrière, pour le gel ou graisse d'étanchéité qui va remplir, par l'arrière de ceux-ci, les deux orifices 53 d'introduction des petits fils 1, en revêtant par cette opération et grâce aux jeux existants (non apparent sur le dessin), les deux I.D.C. 40 et 44.

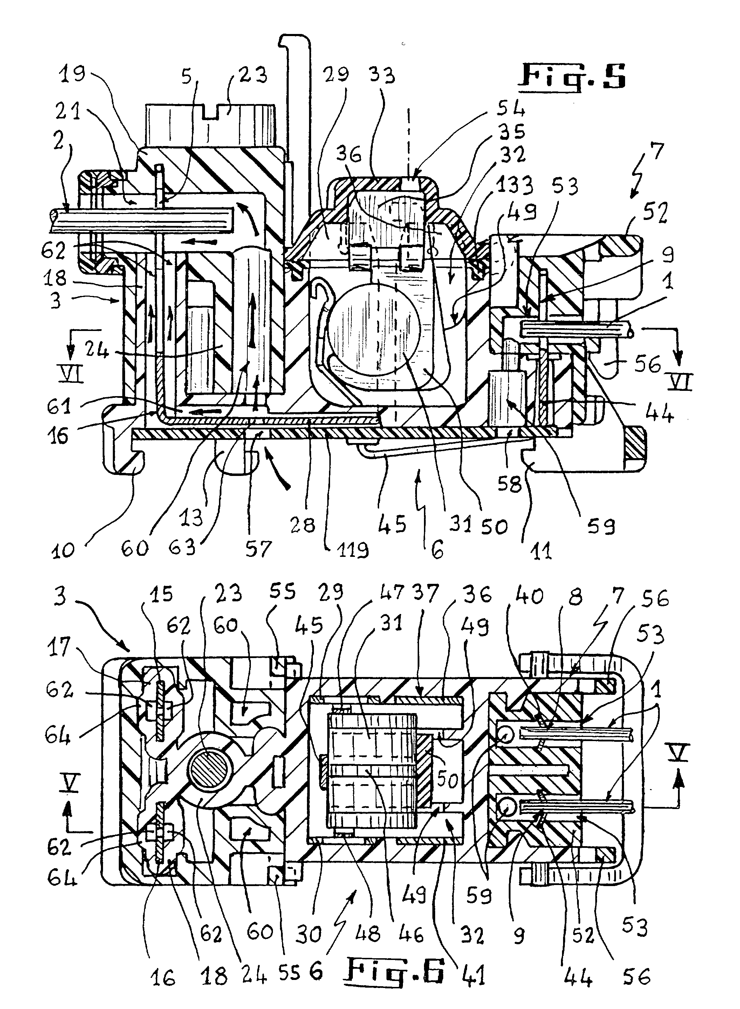

Les circuits d'injection du gel ou graisse, aussi bien à l'avant (côté gros fils) qu'à l'arrière (côté petits fils) du module sont bien apparents sur les figures 5, 6 et 7.

Du côté des petits fils 1, le circuit est très simple. Il se compose, dans l'alignement et l'axe de chacun des orifices d'injection 58, d'un canal respectif d'injection 59 pour chacun des orifices borgnes 53. Chacun de ces deux canaux d'injection 59 est prévu de moulage dans le corps du module. Il est vertical sur la figure 5, et donc perpendiculaire à l'orifice borgne 53 dans le fond duquel il débouche. Le remplissage de ces deux orifices 53 par le gel ou graisse s'effectue donc sans risque de formation de bulles d'air.

Du côté des gros fils 2, les deux circuits d'injection de gel ou graisse sont un peu plus complexes, car ils assurent non seulement l'injection, par des canaux respectifs 60, parallèles tous deux aux deux canaux verticaux 59 précités, du gel ou graisse dans le fond des deux orifices borgnes 20 et 21, mais encore, par un canal de dérivation respectif, ces deux canaux de dérivation présentant chacun une branche horizontale 61 suivie d'une branche verticale 62, l'injection du gel ou graisse le long, et sur chacune des deux grandes faces, de chaque I.D.C. 15 et 16.

Chaque canal 60 est rectiligne, comme son homologue 59, et est prévu lui aussi de moulage dans le corps isolant du module. Il traverse cependant la branche horizontale 27 ou 28 du contact métallique respectif associé 25 ou 26 (figure 8), et pour ceci cette branche métallique horizontale 27 ou 28 est percée d'un petit orifice 63 de passage du gel ou graisse.

Les canaux verticaux 62 d'amenée du gel ou graisse le long des I.D.C. 15 et 16 sont obtenus de moulage des réceptacles 17 et 18, ceux-ci présentant des renflements 64 en conséquence (figure 2).

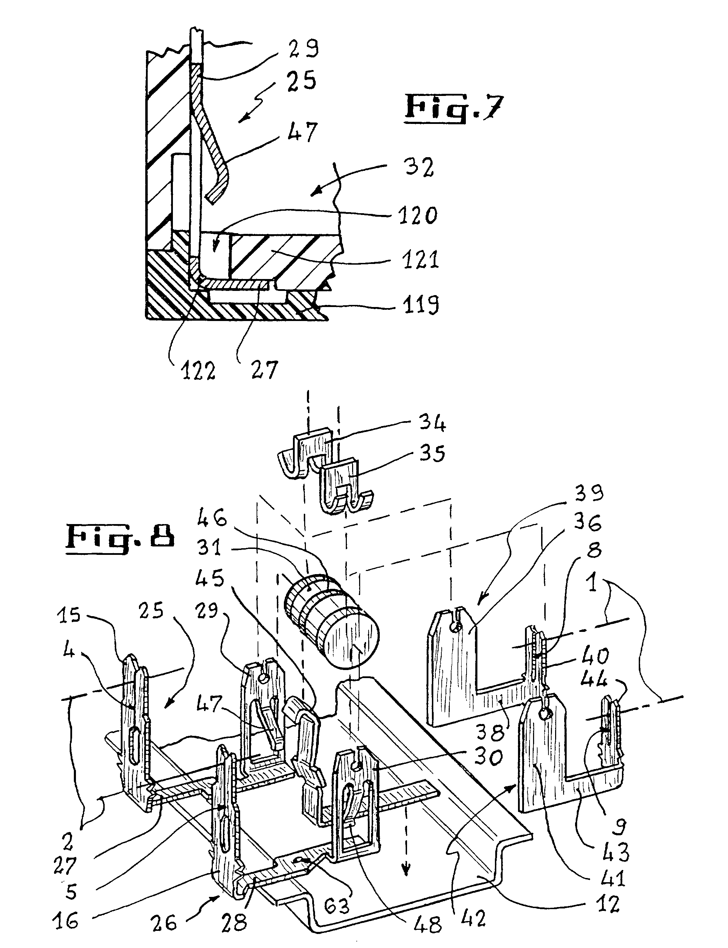

En se référant aux figures 5 et 7, il convient de bien noter que les contacts 28 et 27 sont bien baignés par le gel ou graisse d'étanchéité, ce qui est souhaité pour une bonne protection de ces contacts.

Il convient néanmoins d'éviter que le gel ou graisse injecté par le ou les orifices précités ne puisse se propager vers l'intérieur du puits 32. Celui-ci doit en effet rester libre de gel ou graisse pour pouvoir, après ouverture de son couvercle étanche, y effectuer à loisir des tests éventuellement répétitifs à l'aide de pinces crocodile ou de fiches sans que celles ci ne se recouvrent alors d'un tel gel ou graisse.

Or, comme on le voit bien sur la figure 7, il faut prévoir ; dans la partie plastique isolante du module, un passage relativement large 120 pour chaque bras avancé 47 de réception d'une électrode de ligne du parasurtension 31.

Pour éviter que le gel ou graisse ne puisse donc se propager, par ce passage 120, dans le puits 32, le corps plastique 119,121 du module est conformé à cet endroit pour que, comme représenté, le rabat angulaire 122 de la branche de liaison 27 à cet endroit vienne boucher le fond de ce passage 120.

Le module qui vient d'être décrit a pour avantage non seulement de présenter un coût de fabrication relativement réduit, mais encore de pouvoir aisément être adapté , à peu de frais, aux souhaits particuliers des clients.

A ce sujet, la figure 9 montre comment on peut aisément transformer ce module pour lui faire recevoir un module enfichable 66 de protection et de coupure qui est par exemple identique au module 22 du document US-A-5.515.436 précité. Pour ceci, il aura suffi de modifier la partie 6 du module afin d'adapter le puits 32 pour lui faire recevoir la partie 210 selon ce document US.

Par ailleurs, ce module peut aussi se transformer aisément pour le montage multiple, en usine, sur un câble multi-paires, ce genre de montage étant dit «montage en bloc ». A ce sujet, la figure 10 montre comment on réalise cette transformation et ce montage en bloc sur un câble multi-paires 67 (cette opération s 'appelle « compoundage du câble » en termes du métier).

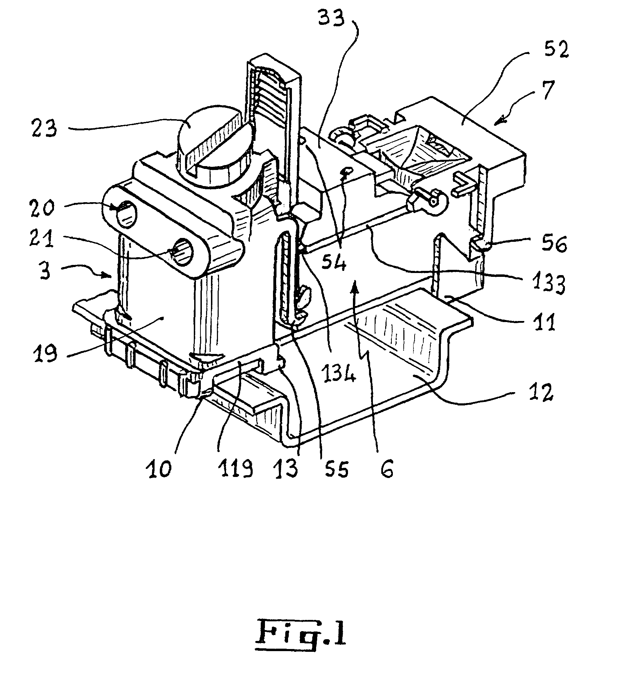

Pour ceci, on supprime la partie arrière 7 de plusieurs modules selon la figure 1, et l'on accole dos à dos, comme représenté, les modules deux à deux. A noter que la coupe de la figure 10 est faite selon une ligne brisée passant par l'orifices 20 de l'un des deux modules dos à dos et par l'axe de la vis 23 de l'autre module.

En conséquence, pour pouvoir recevoir les « petits fils » contenus dans le câble multi-paires 67, les contacts complexes arrière 38, 42 (figure 8) des deux modules sont refermés, selon la figure 11 par exemple, pour déboucher vers le bas, à proximité du câble 67, comme représenté, ce qui permet de recevoir chaque brin 68 du câble 67 dans l'I.D.C. correspondant 40.

En outre, le contact de masse 45 présente la forme de lyre représentée, et se termine vers le bas, dans le bac (ou « piscine ») 69 de réception du câble 67, par un I.D.C. 70.

Un bloc 71 est constitué d'un série suffisante de paires de modules selon la figure 10.

En usine un shunt de masse (non représenté) est enfiché dans tous les I.D.C. de masse 70, puis est relié au fil de masse du câble 67 pour permettre ensuite une mise à la masse de l'ensemble.

La partie interne du bac inférieur 69 est alors remplie d'une résine d'enrobage, après injection du gel ou graisse d'étanchéité, et le bloc ainsi formé est alors prêt à recevoir tous les gros fils 2 de départ vers les abonnés. Dans ce cas, on peut aussi remplir séparément de gel ou graisse les parties 3 des modules, et les monter sur l'embase réceptrice avant l'opération d'enrobage.

Comme il va de soi, l'invention n'est pas limitée aux exemples de réalisation qui viennent d'être décrits, et bien d'autres adaptations aisées de ce module sont en particulier envisageables.

C'est ainsi par exemple que le parasurtension 31 pourrait , moyennant quelques adaptations évidentes, être reçu entre les électrodes 36 et 41, et non pas entre les électrodes 29 et 30 ; En particulier alors, le contact de masse 45 serait inversé par rapport à celui représenté en figure 8.

C'est ainsi également que ce module pourrait se contenter d'être un module à coupure, et non pas à coupure et protection, auquel cas il ne serait pas conformé pour recevoir un parasurtension.

C'est ainsi aussi que le nombre d'orifices d'injection du gel, ou de la graisse, d'étanchéité n'est pas figé à quatre : il pourrait très bien n'en exister qu'un seul, ou deux, ou trois, ou autre nombre.

## Revendications

1. Module, d'interconnexion de deux lignes monopaires, dont une ligne d'arrivée et une ligne de départ, ce module utilisant des contacts autodénudants (15, 16, 40, 44) pour réaliser la connexion des extrémités respectives des fils électriques gainés de chacune des deux paires, les deux fils électriques gainés, appelés « petits fils » (1), d'une des deux lignes ayant une âme conductrice qui est de diamètre inférieur à celui de l'âme conductrice respective de chacun des deux fils électriques gainés, appelés « gros fils » (2), de l'autre ligne,
· ce module comportant par ailleurs un dispositif de coupure de ligne (6) incorporé dans le module d'interconnexion, sous la forme d'un puits de test (32) comportant les extrémités libres de quatre lames (29, 30, 36, 41), ou brins de test des quatre bornes de ligne et qui est refermé, de manière étanche (133) par un couvercle (33) de mise en continuité ou de coupure de ligne par interconnexion, ou non, de ces lames de test,
· une paire de contacts autodénudants (15, 16) relatifs aux deux « gros fils » et une paire de contacts autodénudants (40, 44) relatifs aux deux « petits fils » étant respectivement positionnées de part et d'autre de ce puits (32),
· la paire de contacts autodénudants (15, 16) relatifs aux deux « gros fils » étant associée à un premier dispositif isolant (19) de réception de ces deux fils (2) et d'introduction forcée de ceux-ci dans leurs fentes autodénudantes respectives (4, 5), ce premier dispositif comportant une vis maîtresse (23) d'actionnement pour pousser ces deux fils (2) dans ces fentes réceptrices, ce dispositif isolant (19) de connexion forcée des gros fils (2) étant placé du même côté du puits (32) que cette paire de contacts autodénudants (15, 16),
· l'autre paire de contacts autodénudants (40, 44), relative aux deux « petits fils » (1), étant associée à un deuxième dispositif isolant (52) de réception et d'introduction forcée de ces petits fils qui est placé du même côté du puits (32) que cette autre paire (40, 44), **caractérisé en ce que**
· le puits de test (32) est agencé pour recevoir, de manière amovible grâce au couvercle (33), un parasurtension (31).

2. Module selon la revendication 1, **caractérisé en ce que** le parasurtension (31) est lui-même retenu dans une pince isolante (50) comportant un organe de préhension (51) qui affleure ou dépasse de l'embouchure du puits (32) lorsque ce parasurtension est mis en place dans le puits avec cette pince, et qui demeure alors dans ce puits avec le parasurtension qu'elle maintient, de sorte qu'alors ce parasurtension devient aisément extractible de ce puits à l'aide de cette pince.

3. Module selon la revendication 1 ou 2, **caractérisé en ce que** le dispositif isolant (52) de réception et d'introduction forcée des petits fils (1) est un simple poussoir de connexion à action manuelle.

4. Module selon l'une des revendications précédentes, **caractérisé en ce qu'**il présente, outre des pattes (10, 11) formant glissière de fixation sur un rail (12), au moins une patte additionnelle (13), plus rapprochée d'une desdites pattes que l'autre patte (11), de façon à pouvoir aussi monter ce module sur un rail (14) moins large que le premier rail (12).

5. Module selon l'une des revendications précédentes, **caractérisé en ce qu'**il comporte un ou plusieurs orifices (57, 58) d'injection d'un gel ou d'une graisse d'étanchéité, ce ou ces orifices étant reliés, dans le corps du module, à un ou plusieurs canaux (59, 60, 61, 62) d'injection de gel ou graisse, qui au moins aboutissent dans le fond des deux orifices borgnes (20, 21) d'introduction des deux « gros fils » (2) et dans le fond des deux orifices borgnes (53) d'introduction des deux « petits fils » (1), afin que ce remplissage en gel ou graisse de ces quatre orifices borgnes (20, 21, 53, 53) se fasse par le fond de ces orifices borgnes et non pas par leur embouchure, ce qui évite la formation de bulles d'air.

6. Module selon la revendication 5, **caractérisé en ce qu'**il comporte plusieurs orifices (57, 57, 58, 58) d'injection de gel ou graisse vers respectivement lesdits orifices borgnes (20, 21, 53, 53), chaque orifice étant attaché à un circuit (59, 60) respectif d'injection de gel ou graisse.

7. Module selon l'une des revendications 5 ou 6, **caractérisé en ce que**, du côté des gros fils (2), les circuits d'injection de gel ou graisse assurent (60) non seulement l'injection du gel ou graisse dans le fond des deux orifices borgnes (20, 21), mais encore, par des canaux de dérivation respectifs (61, 62), l'injection du gel ou graisse le long de chaque contact autodénudant (15, 16) de réception de ces gros fils.

8. Module selon l'une des revendications 5 à 7, **caractérisé en ce que**, pour éviter que le gel ou graisse ne puisse donc se propager, par un ou des passages (120) prévus pour des contacts (47) situés dans le puits de test (32) et solidaires, par l'intermédiaire d'une branche de liaison (27), chacun d'un contact autodénudant de connexion de ligne, le corps plastique (119, 121) du module est conformé à ce ou ces endroits (120) pour que le rabat angulaire (122) de la branche de liaison (27) à cet endroit vienne boucher le fond de ce passage (120) et par suite s'opposer au passage du gel ou de la graisse.

9. Module selon l'une des revendications 1 à 8, **caractérisé en ce que** ledit couvercle de continuité (33) possède un organe de verrouillage (134) qui, lors de la remontée, par desserrage de sa vis maîtresse (23), du dispositif isolant (19) de réception et connexion des gros fils, rend ce dispositif (19) imperdable tant que ce couvercle (33) est fermé.

10. Module selon la revendication 9, **caractérisé en ce que** cet organe de verrouillage (134) est constitué par au moins un ergot latéral.

11. Module selon l'une des revendications 1 à 10, **caractérisé en ce que** ledit dispositif (19) de connexion des gros fils possède au moins un cliquet (55) de fin de course de connexion qui non seulement assure, par son encliquetage en fin de course, une mise en place ferme de ce dispositif (19), mais encore, par le claquement qui résulte de cet encliquetage, informe le monteur du fait que la connexion autodénudante est positivement effectuée.

12. Module selon l'une des revendications précédentes, **caractérisé en ce que** ledit dispositif (52) de connexion des petits fils possède au moins un cliquet (56) de fin de course de connexion qui non seulement assure, par son encliquetage en fin de course, une mise en place ferme de ce dispositif (52), mais encore, par le claquement qui résulte de cet encliquetage, informe le monteur du fait que la connexion autodénudante est positivement effectuée.

## Claims

1. Module for interconnection of two monopair lines, including an incoming line and an outgoing line, this module employing insulation-displacing contacts (15, 16, 40, 44) to produce the connection of the respective ends of the sheathed electric wires of each of the two pairs, the two sheathed electric wires, called "small wires" (1), of one of the two lines having a conducting core which is of diameter smaller than that of the respective conducting core of each of the two sheathed electric wires, called "large wires" (2), of the other line,
• this module further comprising a line cut-off device (6), incorporated in the interconnection module in the form of a test chamber (32) comprising the free ends of four test blades or strands (29, 30, 36, 41) of the four line terminals and which is hermetically (133) closed by a lid (33) for the line continuity or for the cut-off by interconnection, or not, of these test blades,
• a pair of insulation-displacing contacts (15, 16) relative to the two "large wires" and a pair of insulation-displacing contacts (40, 44) relative to the two "small wires" being respectively positioned on either side of this chamber (32),
• the pair of insulation-displacing contacts (15, 16) relative to the two "large wires" being associated with a first insulating device (19) for receiving these two wires (2) and for forced introduction thereof in their respective insulating-displacing slots (4, 5), this first device comprising a master actuation screw (23) for pushing these two wires (2) in these receiving slots, this insulating device (19) for forced connection of the large wires (2) being placed on the same side of the chamber (32) as this pair of insulation-displacing contacts (15, 16),
• the other pair of insulation-displacing contacts (40, 44) relative to the two "small wires" (1), being associated with a second insulating device (52) for receiving and forced introduction of these small wires, which is placed on the same side of the chamber (32) as this other pair (40, 44), **characterized in that**
• the test chamber (32) is arranged to receive, in a removable manner owing to the lid (33), an excess voltage protector (31).

2. Module according to claim 1, **characterized in that** the excess voltage protector (31) is itself retained in an insulating nipper (50) comprising a gripping member (51) which is flush with or projects beyond the opening of the chamber (32) when this excess voltage protector is positioned in the chamber with this nipper, and which then remains in this chamber with the excess voltage protector which it hold, such that this excess voltage protector can be easily extracted from this chamber with the aid of this nipper.

3. Module according to claim 1 or 2, **characterized in that** the insulating device (52) for receiving and forced introduction of the small wires (1) is a simple hand-actuated connection pusher.

4. Module according to one of the preceding claims, **characterized in that**, in addition to tabs (10, 11) forming a slide for fastening on a rail (12), it presents at least one additional tab (13), nearer one of said tabs than the other tab (11), so as to be able to fit this module on a rail (14) less wide than the first rail (12).

5. Module according to one of the preceding claims, **characterized in that** it comprises one or more orifices (57, 58) for injection of a sealing gel or grease, this or these orifices being connected, in the body of the module, to one or more gel or grease injection channels (59, 60, 61, 62), which at least terminate in the rear of the two blind orifices (20, 21) for introduction of the two "large wires" (2) and in the rear of the two blind orifices (53) for introduction of the two "small wires" (1), in order that these four blind orifices (20, 21, 53, 53) are filled with gel or grease via the rear of these blind orifices and not via their opening, which avoids the formation of air bubbles.

6. Module according to claim 5, **characterized in that** it comprises several orifices (57, 57, 58, 58) for injection of gel or grease respectively towards said blind orifices (20, 21, 53, 53), each orifice being attached to a respective gel or grease injection circuit (59, 60).

7. Module according to one of claims 5 or 6, **characterized in that**, on the large wire (2) side, the gel or grease injection circuits (60) ensure not only the injection of the gel or grease in the rear of the two blind orifices (20, 21), but, via respective bypass channels (61, 62), the injection of the gel or grease along each insulation-displacing contact (15, 16) for receiving these large wires.

8. Module according to one of claims 5 to 7, **characterized in that**, in order to avoid the gel or grease propagating, via one or more passages (120) provided for contacts (47) located in the test chamber (32) and bound, via a connection branch (27), each with a line insulation-displacing contact connection, the plastic body (119, 121) of the module is shaped at this place or these places (120) for the angular flap (122) of the connection branch (27) at this place to close the bottom of this passage (120) and consequently oppose the passage of the gel or grease.

9. Module according to one of claims 1 to 8, **characterized in that** said continuity lid (33) presents a locking member (134) which, when the insulating device (19) for reception and connection of the large wires is lifted by its master screw (23) being unscrewed, renders this device (19) captive as long as this lid (33) is closed.

10. Module according to claim 9, **characterized in that** this locking member (134) is constituted by at least one lateral catch.

11. Module according to one of claims 1 to 10, **characterized in that** said device (19) for connecting the large wires presents at least one end-of-stroke connection catch (55) which not only ensures, by its clipping at the end of stroke, a firm positioning of this device (19), but also, by the clacking sound made by such clipping, informs the assembler that the insulation-displacing connection is positively effected.

12. Module according to one of the preceding claims, **characterized in that** said device (52) for connecting the small wires presents at least one end-of-stroke connection catch (56) which not only ensures, by its clipping at the end of stroke, a firm positioning of this device (52), but also, by the clacking sound made by such clipping, informs the assembler that the insulation-displacing connection is positively effected.

## Patentansprüche

1. Modul zur Verbindung von zwei einpaarigen Leitungen, nämlich einer ankommenden und einer abgehenden Leitung, wobei dieses Modul selbst abisolierende Kontakte (15, 16, 40, 44) verwendet, um die Verbindung der jeweiligen Enden der ummantelten elektrischen Drähte eines jeden Paares herzustellen, wobei die zwei ummantelten, als "dünne Drähte" bezeichneten, elektrischen Drähte (1) einer der beiden Leitungen eine stromführende Seele aufweisen, deren Durchmesser kleiner ist als der Durchmesser der stromführenden Seele der jeweiligen ummantelten, als "dicke Drähte" bezeichneten, elektrischen Drähte (2) der anderen Leitung, wobei
· dieses Modul außerdem eine Vorrichtung zur Unterbrechung der Leitung (6) umfasst, welche in dem Verbindungsmodul als Prüfschacht (32) eingebaut ist und die freien Enden von vier Prüfkontaktstreifen (29, 30, 36, 41) oder -klötzen von vier Leitungsklemmen umfasst und durch einen durch Verbinden oder Nicht-Verbinden dieser Prüfkontaktstreifen die Leitung durchschaltenden oder unterbrechenden Deckel (33) dicht (133) abgeschlossen wird,
· ein Paar selbst abisolierender, den zwei "dicken Drähten" zugeordneter Kontakte (15, 16) und ein Paar selbst abisolierender, den zwei "dünnen Drähten" zugeordneter Kontakte (40, 44) jeweils auf beiden Seiten des Schachts (32) angeordnet sind,
· das Paar selbst abisolierender, den zwei "dicken Drähten" zugeordneter Kontakte (15, 16) mit einer ersten isolierenden Vorrichtung (19) verbunden ist, welche diese beiden Drähte (2) aufnimmt und sie in ihre jeweiligen selbst abisolierenden Schlitze (4, 5) hineinzwingt, wobei diese erste Vorrichtung eine Hauptbetätigungsschraube (23) umfasst, die diese beiden Drähte (2) in ihre Aufnahmeschlitze hineindrückt, und diese isolierende Vorrichtung (19) zur erzwungenen Verbindung der dicken Drähte (2) auf der gleichen Seite des Schachts (32) wie dieses Paar selbst abisolierende Kontakte (15, 16) angeordnet ist,
· das andere Paar selbst abisolierender, den zwei "dünnen Drähten" zugeordneter Kontakte (40, 44) mit einer zweiten isolierenden Vorrichtung (52) zur Aufnahme und erzwungenen Einführung dieser dünnen Drähte verbunden ist, wobei diese Vorrichtung auf der gleichen Seite des Schachts (32) wie dieses andere Paar (40, 44) angeordnet ist, **dadurch gekennzeichnet, dass** der Prüfschacht (32) derart ausgebildet ist, dass er infolge des Deckels (33) einen entfernbaren Überspannungsableiter (31) aufnehmen kann.

2. Modul nach Anspruch 1, **dadurch gekennzeichnet, dass** der Überspannungsableiter (31) seinerseits in einer Isolierklammer (50) gehalten wird, welche ein Greifelement (51) aufweist, das fluchtend mit der Mündung des Schachts (32) angeordnet ist oder aus dieser herausragt, wenn dieser Überspannungsableiter mit Hilfe dieser Klammer in dem Schacht angebracht wird, wobei diese Klammer zusammen mit dem von ihr gehaltenen Überspannungsableiter dann in dem Schacht verbleibt, so dass der Überspannungsableiter mit Hilfe dieser Klammer leicht herausnehmbar ist.

3. Modul nach Anspruch 1 oder 2, **dadurch gekennzeichnet, dass** die isolierende Vorrichtung (52) zur Aufnahme und erzwungenen Einführung der dünnen Drähte (1) ein einfacher mit der Hand zu betätigender Verbindungsdruckschalter ist.

4. Modul nach einem der vorstehenden Ansprüche, **dadurch gekennzeichnet, dass** es zusätzlich zur verschiebbaren Befestigung auf einer Schiene (12) dienenden Krallen (10, 11) mindestens eine weitere Kralle (13) aufweist, die näher an der einen Kralle als die andere Kralle (11) angeordnet ist, so dass dieses Modul auch auf eine Schiene (14) montiert werden kann, die weniger breit ist als die erste Schiene (12).

5. Modul nach einem der vorstehenden Ansprüche, **dadurch gekennzeichnet, dass** es eine oder mehrere Öffnungen (57, 58) zum Einspritzen eines Dichtungsgels oder -fettes umfasst, wobei diese Öffnung/en im Körper des Moduls mit einem oder mehreren Einspritzkanälen (59, 60, 61, 62) für Gel oder Fett verbunden sind, die wenigstens am Boden der beiden Sacklochöffnungen (20, 21) zur Einführung der beiden "dicken Drähte" (2) und am Boden der beiden Sacklochöffnungen (53) zur Einführung der beiden "dünnen Drähte" (1) münden, so dass diese vier Sacklochöffnungen (20, 21, 53, 53) über ihren Boden und nicht etwa über ihre Mündung mit Gel oder Fett gefüllt werden, wodurch die Bildung von Luftblasen vermieden wird.

6. Modul nach Anspruch 5, **dadurch gekennzeichnet, dass** es mehrere Öffnungen (57, 57, 58, 58) zum Einspritzen eines für die jeweiligen Sacklöcher (20, 21, 53, 53) bestimmten Gels oder Fetts, umfasst, wobei jede Öffnung mit einem eigenen Einspritzkreis (59, 60) für das Gel oder Fett verbunden ist.

7. Modul nach einem der Ansprüche 5 oder 6, **dadurch gekennzeichnet, dass**, auf der Seite der dicken Drähte (2), die Einspritzkreise für das Gel oder Fett (60) nicht nur das Einspritzen des Gels oder Fetts in den Boden der beiden Sacklöcher (20,21), sondern auch, über jeweilige Zweigkanäle (61, 62), das Einspritzen des Gels oder Fetts entlang eines jeden selbst abisolierenden Kontakts (15, 16) zur Aufnahme dieser dicken Drähte gewährleisten.

8. Modul nach einem der Ansprüche 5 bis 7, **dadurch gekennzeichnet, dass** zur Vermeidung einer Verbreitung des Gels oder Fetts über einen oder mehrere Durchgänge (120), die für Kontakte (47) vorgesehen sind, die sich in dem Prüfschacht (32) befinden und die über einen Verbindungssteg (27) jeweils mit einem selbst abisolierenden Leitungsverbindungskontakt einstückig verbunden sind, der Kunststoffkörper (119, 121) des Moduls an dieser oder an diesen Stellen (120) derart ausgebildet ist, dass der an dieser Stelle winkelförmig umgeklappte Teil (122) des Verbindungsstegs (27) den Boden dieses Durchgangs (120) verschließt und dadurch den Durchtritt des Gels oder Fetts verhindert.

9. Modul nach einem der Ansprüche 1 bis 8, **dadurch gekennzeichnet, dass** der Durchschaltdeckel (33) ein Verriegelungselement (134) aufweist, das, wenn die isolierende Vorrichtung (19) zur Aufnahme und Verbindung der dicken Drähte durch Lösen der Hauptschraube nach oben steigt, dafür sorgt, dass diese Vorrichtung (19) nicht verloren geht, solange der Deckel (33) geschlossen bleibt.

10. Modul nach Anspruch 9, **dadurch gekennzeichnet, dass** dieses Verriegelungselement (134) aus mindestens einem seitlich vorstehenden Stift besteht.

11. Modul nach einem der Ansprüche 1 bis 10, **dadurch gekennzeichnet, dass** die Vorrichtung (19) zur Verbindung der dicken Drähte mindestens eine Klinke (55) zur Arretierung des Verbindungsvorgangs aufweist, wobei diese Klinke nicht nur durch ihr Einrasten am Ende des Weges die sichere Anbringung dieser Vorrichtung (19) gewährleistet, sondern auch durch das beim Einrasten hervorgerufene Klicken den Monteur davon in Kenntnis setzt, dass die selbst abisolierende Verbindung erfolgreich vorgenommen wurde.

12. Modul nach einem der vorstehenden Ansprüche, **dadurch gekennzeichnet, dass** die Vorrichtung (52) zur Verbindung der dünnen Drähte mindestens eine Klinke (56) zur Arretierung des Verbindungsvorgangs aufweist, wobei diese Klinke nicht nur durch ihr Einrasten am Ende des Weges die sichere Anbringung dieser Vorrichtung (52) gewährleistet, sondern auch durch das beim Einrasten hervorgerufene Klicken den Monteur davon in Kenntnis setzt, dass die selbst abisolierende Verbindung erfolgreich vorgenommen wurde.
